# EUROPEAN PATENT APPLICATION

(11) **EP 1 388 792 A1**
(43) Date of publication of application: **11.02.2004**
(21) Application number: 02798030.9
(22) Date of filing: 03.09.2002
(51) Int. Cl.: G06F 15/00, G06F 12/00, G06F 13/00

(54) **SYNCHRONIZATION MESSAGE PROCESSING METHOD**

(30) Priority: 05.09.2001 JP 2001269247
(71) Applicant: MATSUSHITA ELECTRIC INDUSTRIAL CO., LTD., Kadoma-shi, Osaka 571-8501 (JP)
(72) Inventor: UENOYAMA, Tsutomu, Kawasaki-shi, Kanagawa 210-0022 (JP); YAMADA, Kazunori, Yokohama-shi, Kanagawa 224-0053 (JP)
(74) Representative: Grünecker, Kinkeldey, Stockmair & Schwanhäusser Anwaltssozietät
(86) International application number: PCT/JP2002/008908
(87) International publication number: WO 2003/023630

(57) **Abstract**

A synchronization message processing method for preventing damage even when a large amount of synchronization messages are transmitted. In the method, terminal apparatus 100 has application section 102 that stores data to be subjected to data synchronization and accepts user operations on this data, synchronization processor 104 that generates a synchronization message for synchronizing the data stored in application section 102 with the data in server 300 and meanwhile interprets the synchronization message received from server 300, and protocol processor 106 that performs protocol processing to transmit the synchronization message generated in synchronization processor 104 to network 200 and further performs protocol processing to provide a synchronization message received from network 200 to synchronization processor 104, where protocol processor 106 discards a synchronization message when a reception interval between the synchronization message and a previously received synchronization message is within a predetermined time.

## Description

### Technical Field

The present invention relates to a synchronization message processing method in a terminal apparatus that is connected to a server via a network and that acquires data synchronization with the data managed by the server.

### Background Art

In current widespread of information apparatuses, it is not uncommon for one user to have a number of terminal apparatuses such as a mobile terminal, a cellular telephone and a personal computer, and record data such as addresses and schedules in each of the apparatuses. The act of updating the data recorded in a number of terminal apparatuses to the latest data is referred to as "data synchronization," and by acquiring the data synchronization, data contents stored in each of the terminal apparatuses are unified.

In recent years, there have emerged a system that executes data synchronization in each terminal apparatus of a user as a substitute for the user, and a system, referred to as groupware, in which parties of interest share the data needed for business over a network, view the data and copy the data to the parties' terminal.

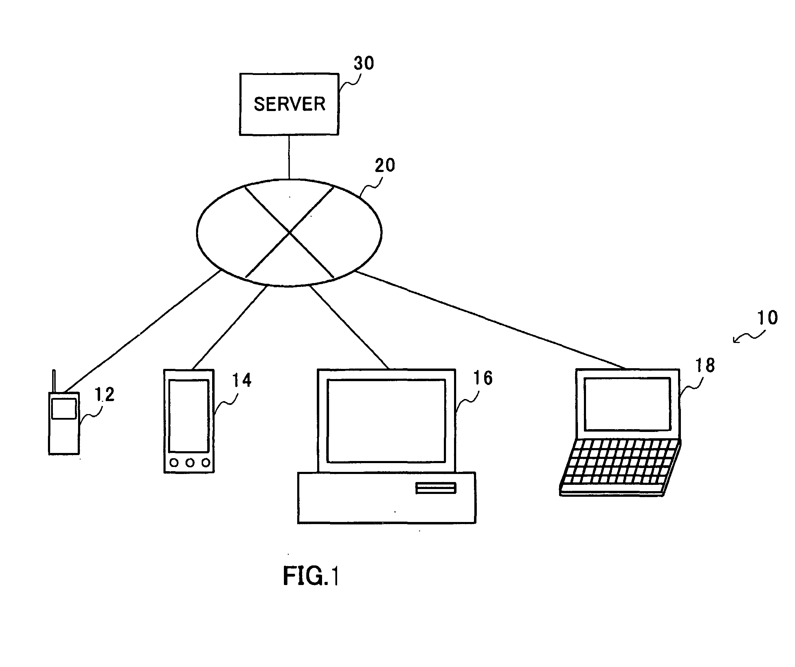

In such a system, as illustrated in FIG.1, for example, cellular telephone 12, mobile terminal 14, desktop personal computer 16, and notebook personal computer 18 are connected as terminal apparatuses 10 (abbreviated as "TERMINAL" in the drawing, which applies to other drawings as well.) to server 30 via internet 20. For example, when an address book in cellular telephone 12 is updated, the updated data is registered with server 30. In the case of updating address books stored in terminal apparatuses 14, 16, and 18 other than cellular telephone 12, a data synchronization request is issued from these terminal apparatuses 14, 16 and 18 to server 30 via internet 20. Upon receiving the request, server 30 returns the updated data of the address book, and the address books in terminal apparatuses 14, 16 and 18 are updated.

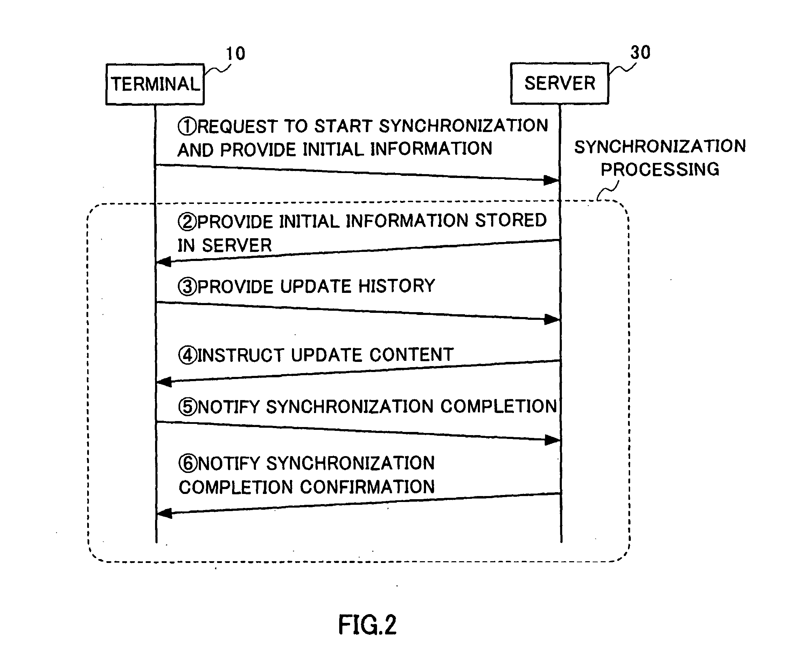

FIG.2 illustrates a processing sequence of the case. First, terminal apparatus 10 in need of data synchronization requests server 30 to start synchronization and provides initial information including the last update date/time (1). Upon receiving a request, server 30 starts the synchronization processing, and provides the initial information stored in server 30 to terminal apparatus 10 including the last update date/time (2). When terminal apparatus 10 needs a data update, the apparatus 10 provides an update history of the address book to server 30 (3) , and server 30 compares the address book data stored in server 30 with the address book data of terminal apparatus 10, reports the update content to terminal apparatus 10, and instructs the update (4). After updating the address book exactly to the update content received from server 30, terminal apparatus 10 transmits a synchronization completion notification to server 30 (5). Server 30 then records the update state in terminal apparatus 10 and transmits a synchronization completion confirmation notification to terminal apparatus 10 (6).

Dedicated software needs to be installed in terminal apparatus 10 to perform such data synchronization processing, and yet this software is not versatile. Therefore, the standardization of data synchronization processing is currently under discussion, and this standardization scheme is generally referred to as "Sync ML."

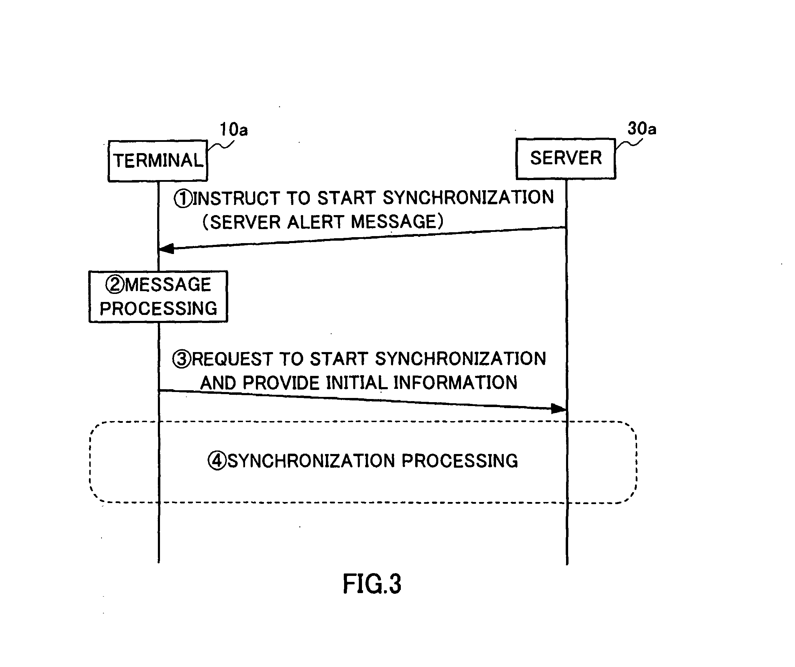

In the new synchronization processing sequence under SyncML, as shown in FIG. 3, server 30a first transmits to apparatus 10a a message (referred to as "Server Alert Message") that instructs to start data synchronization (1), and terminal apparatus 10a interprets the message (message processing) to display on a display screen (2). When a user chooses data synchronization processing, in the same way as in FIG.2, terminal apparatus 10a provides a request to start the synchronization processing and initial information to server 30a (3), and the same synchronization processing as in FIG.2 starts (4).

The new synchronization processing sequence under Sync ML differs from the case of FIG.2 in that server 30a issues an instruction to start data synchronization, and terminal apparatus 10a executes the message processing.

At this point, since server 30a transmits a server alert message without knowing conditions of the user and terminal apparatus 10a, a case may occur that terminal apparatus 10a does not transmit a synchronization start request (3). Therefore, when not receiving the synchronization start request (3) from terminal apparatus 10a, server 30a repeatedly transmits a server alert message.

With the server side thus issuing a synchronization start request, the user does not forget to execute the data synchronization of the terminal apparatus. Moreover, in terminal apparatus manufacturers, by introducing the Sync ML scheme to systems that register and manage sold terminal apparatuses in a server, it is possible to upgrade the software in each terminal apparatus through the server.

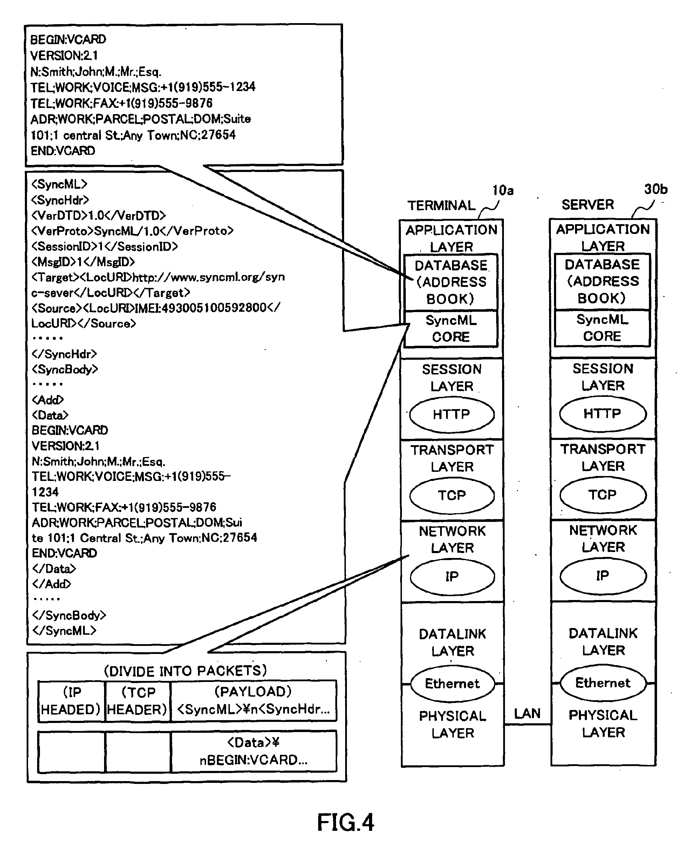

FIG.4 illustrates a protocol configuration of Sync ML. In communications where the data of an application is exchanged between terminal apparatus 10a and server 30a, in each corresponding layer, the transmitting side executes processing for dividing data and adding a header to the data, and the receiving side executes processing for removing the header from the data and connecting the data.

FIG.4 illustrates by an example processing where the data newly added into the database of the address book in terminal apparatus 10a is transmitted to server 30a. This data is converted into synchronizationmessage data format through Sync ML core, and then, through the processing in the session layer (e.g. HTTP) , the transport layer (e.g. TCP) and the network layer (e.g. IP), formed into packets with an IP header to be transmitted to LAN-connected server 30a, for example.

In server 30a, the received data is restored to the data of synchronization message format through the processing in the network layer, the transport layer, and the session layer. In the session layer, from the format, the data is identified to be a synchronization message and then provided to Sync ML core. Sync ML core interprets and converts this data into a data structure to write into the data base of the address book of the application. Thus, new data is added to the database of the application of server 30a.

The processing in each layer of the protocol configuration takes place in a CPU in terminal apparatus 10a or server 30a. As a layer is higher, the processing in the layer increases the burden on CPU, and thus increases the time required for the processing. For example, assuming the total processing time for processing 100-bytes of data through the network layer, the transport layer, and the session layer is 0.01 sec, the message processing executed in SyncML core requires the processing time of 0.1 sec that is approximately 10 times.

However, under the SyncML scheme whereby a server transmits a synchronization start instruction message (server alert message), the following problem is predicted.

During the process of data synchronization processing, terminal apparatus 10a and server 30a communicate with each other while waiting for a response from the other to proceed to a next transmission. However, a server alert message whereby the server 30a instructs terminal apparatus 10a to start data synchronization is transmitted regardless of the will of the user and the state of terminal apparatus 10a. Terminal apparatus 10a, upon receiving the message, processes and interprets the message. It is up to the user to determine whether or not to start data synchronization based on the result of interpretation; however, once a server alert message is received, it is necessary to process the message, and the load on CPU from the processing is not small.

If a malicious person (such as a hacker and a cracker) sends a large amount of synchronization messages (for example, 100 messages in one second) to terminal apparatus 10a, terminal apparatus 10a has to process all these message while stopping all the other processing, and furthermore, there is a threat that, in the worst case, the system freezes. In the present context, "a synchronization message" refers to an arbitrary message related to data synchronization processing, and includes all the messages shown in FIG.3 (and FIG.2) along with Server Alert Message.

Actually, damage caused by a large amount of message being sent at the same time has occurred sometimes in popular homepages and search pages.

In order to prevent occurrences of such damage, a method is generally performed of setting a black list and white list where the black list specifies senders reception from which is rejected and the white list specifies senders reception from which is permitted, and discarding a message from a sender described in the black list and a message from a sender except the senders described in the white list.

However, it takes a time for a user to create such a list, and it is difficult to create an effective list. Further, in a system where software in a terminal apparatus is set via a server, there is a case that the manufacturer changes the server, and in such a case, when a sender of a synchronization message is restricted by the white list, there is a fear that a synchronization message cannot be received from a server whose message shouldbe received. Furthermore, it is practically difficult to specify appearing hackers by black list.

### Disclosure of Invention

It is an object of the present invention to provide a synchronization message processing method for preventing damage even when a large amount of synchronization messages are transmitted.

According to an aspect of the present invention, the synchronization message processing method has the steps of receiving data, determining whether or not the received data is a synchronization message, recording the receipt time of the received data when the received data is the synchronization message, calculating a reception interval between a previously received synchronization message and a currently received synchronization message, comparing the calculated reception interval with a threshold, and discarding the currently received synchronization message when the calculated reception interval is not more the threshold.

### Brief Description of Drawings

FIG.1 illustrates an example of a system for implementing data synchronization;
FIG.2 illustrates an example of the data synchronization processing sequence in the system of FIG.1;
FIG.3 illustrates an example of the data synchronization processing sequence in SyncML;
FIG.4 is a conceptual view illustrating an example of protocol processing in SyncML;
FIG.5 is a block diagram illustrating an example of a configuration of a terminal apparatus to which the synchronization message processing method is applied according to a first embodiment of the present invention;
FIG.6 is a block diagram illustrating an example of a hardware configuration of the terminal apparatus as illustrated in FIG.5;
FIG.7 is a flowchart illustrating the operation of a protocol processor in the terminal apparatus as illustrated in FIG.5 to implement the synchronization message processing method according to the first embodiment;
FIG.8 is a flowchart illustrating the operation of a protocol processor in the terminal apparatus as illustrated in FIG.5 to implement a synchronization message processing method according to a second embodiment of the present invention;
FIG.9 is a flowchart illustrating the operation of a protocol processor in the terminal apparatus as illustrated in FIG.5 to implement a synchronization message processing method according to a third second embodiment of the present invention;
FIG.10 is a flowchart illustrating the operation of a protocol processor in the terminal apparatus as illustrated in FIG.5 to implement a synchronization message processing method according to a fourth embodiment of the present invention;
FIG.11 is a flowchart illustrating the operation of a protocol processor in the terminal apparatus as illustrated in FIG.5 to implement a synchronization message processing method according to a fifth embodiment of the present invention;
FIG.12 is a flowchart illustrating the operation of a protocol processor in the terminal apparatus as illustrated in FIG.5 to implement a synchronization message processing method according to a sixth embodiment of the present invention; and
FIG.13 is a flowchart illustrating the operation of a protocol processor in the terminal apparatus as illustrated in FIG.5 to implement a synchronization message processing method according to a seventh embodiment of the present invention.

### Best Mode for Carrying Out the Invention

Embodiments of the present invention will be described specifically below with reference to accompanying drawings.

### (First embodiment)

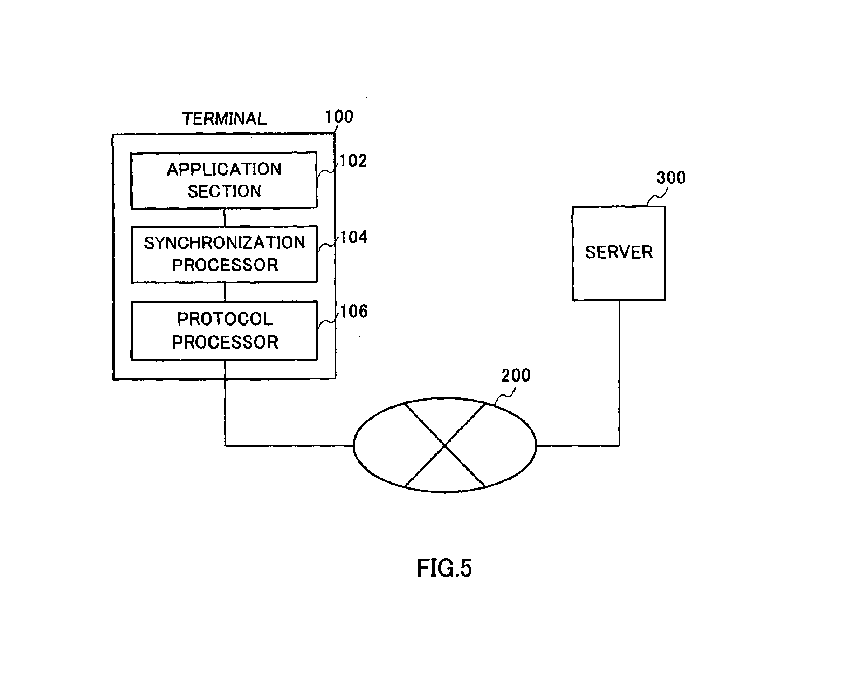

FIG.5 is a block diagram illustrating an example of a configuration of a terminal apparatus to which is applied a synchronization message processing method according to the first embodiment.

As illustrated in FIG.5, terminal apparatus 100 is connected to server 300 via network 200. Terminal apparatus 100 has application section 102 that stores data to be subjected to data synchronization and accepts user operations on this data, synchronization processor 104 that generates a synchronization message for synchronizing the data stored in application section 102 with data in server 300 and meanwhile interprets a synchronization message received from server 300, and protocol processor 106 that performs protocol processing to transmit the synchronization message generated in synchronization processor 104 to network 200 and further performs protocol processing to provide a synchronization message received from network 200 to synchronization processor 104. Specific examples of application section 102 include, for example, telephone book applications for cellular telephones. Between terminal apparatus 100 and server 300, data synchronization processing is performed by SyncML. A "synchronization message" in this context, as mentioned previously, refers to an arbitrary message related to the data synchronization processing, including not only server alert messages but also all messages exchanged between terminal apparatus 100 and server 300, in relation to the data synchronization processing.

Synchronization processor 104 converts transmission data into SyncML data format, while interpreting data received in SyncML format to convert into a data structure to store in application section 102.

When the received data is a synchronization message, protocol processor 106 performs the protocol processing up to restoring the data to data of SyncML format, and provides the processed data to synchronization processor 104. However, in this embodiment, in the case where this synchronization message is one of a plurality of synchronization messages received during a predetermined period, the synchronization message is provided to synchronization processor 104 only when the message is the first data, while being discarded when the message is not the first data. The operation of this protocol processor 106 will later be described in detail.

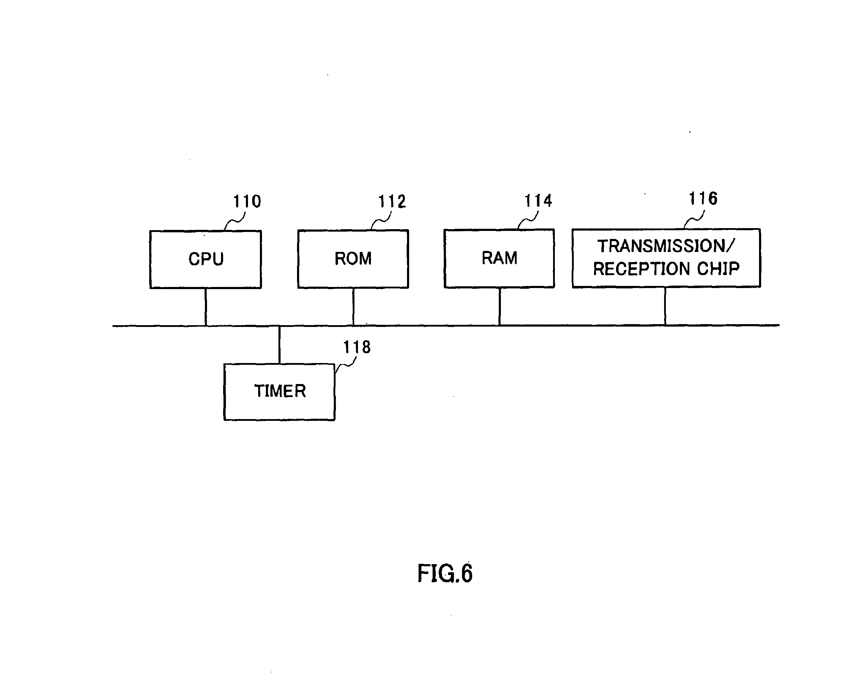

For example, terminal apparatus 100 is a cellular telephone, mobile terminal or personal computer' (see FIG.1), andhas, as a hardware configuration, for example, as shown in FIG.6, CPU 110, ROM 112, RAM 114, transmission/reception chip 116, and timer 118. CPU 110 performs the processing for application section 102, synchronization processor 104, and protocol processor 106. ROM 112 stores a program that specifies the operation of CPU 110. RAM 114 is used as a work area of CPU 110. Transmission/reception chip 116 transmits/receives data through network 200 in FIG.5. Timer 118 measures the reception time of data. In addition, a program storage medium is not limited to ROM, and any arbitrary recording medium that suits to store programs can be used (Flash memory, for example).

The load on CPU 110 required for the processing for synchronization processor 104 and application section 102 is considerably large, as compared to the load on CPU required for the processing for protocol processor 106. Therefore, in this embodiment, in order to reduce the load on CPU 110, protocol processor 106 determines whether to provide a received synchronization message to an upper layer (synchronization processor 104 and application 102) or discard the message without seeing the content before interrupting the synchronization message.

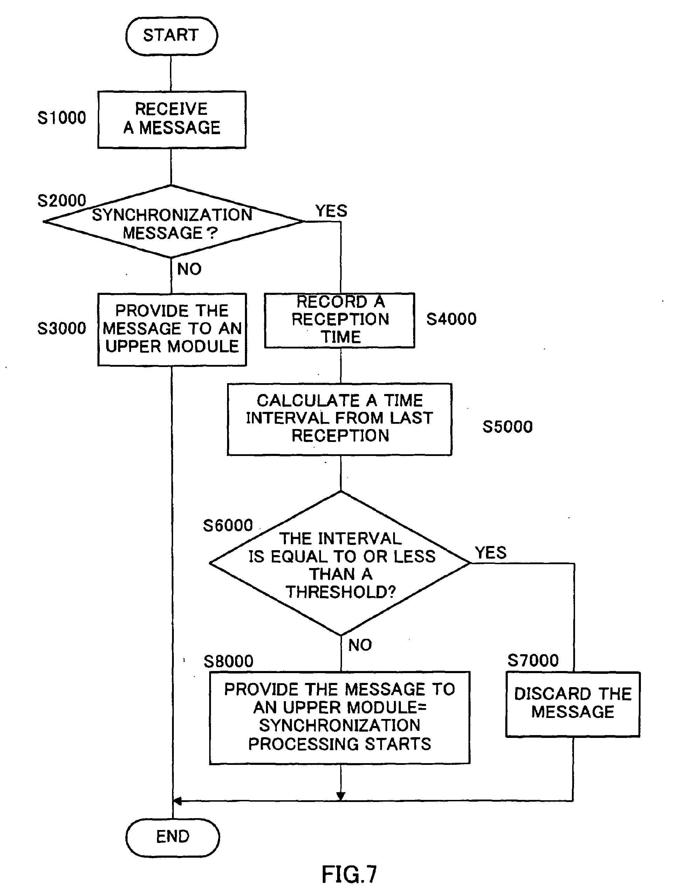

Next, the operation of protocol processor 106 in terminal apparatus 100 with the above-mentioned configuration will be described below with reference to a flowchart shown in FIG.7. FIG.7 illustrates the operation in protocol processor 106 to implement the synchronization message processing method according to this embodiment. In addition, the flowchart as illustrated in FIG.7 is stored in ROM 112 as a control program and implemented by CPU 110.

First, in step S1000, a message (data) is received from server 300.

In step S2000, the protocol processing is performed on the message received in step S1000, and a determination as to whether the received message is a synchronization message or not is made from the data format of the received data. When the received message is not a synchronization message as a result of the determination (for example, when the received message is a message in a web browser or e-mail) (S2000: NO), the processing flow proceeds to step S3000, while proceeding to step S4000 when the received message is a synchronization message (S2000: YES).

In step S3000, the message subjected to the protocol processing in step S2000 is provided to an upper module (for example, processor for web browser and e-mail).

Meanwhile, in step S4000, the reception time of the message (synchronization message) measured by timer 118 is recorded in RAM 114.

In step S5000, a time interval between the reception time of the message currently measured and the reception time of the last synchronization message stored in RAM 114 is calculated.

Then, in step 6000, it is determined whether or not the time interval calculated in step S5000 is less then or equal to a predetermined threshold. The threshold is set, for example, at the processing time during which protocol processor 106 receives a server alert message and synchronization processor 104 completes the processing on the message. When the calculated time interval is less than or equal to the threshold as a result of the determination (S6000: YES), the processing flow proceeds to step S7000, while proceeding to step S8000 when the calculated time interval is more than the calculated threshold (S6000: NO).

In step S7000, since the time interval from the last reception is less than or equal to the threshold, i.e. the reception time interval from the last received synchronization message is within a predetermined time, the currently received synchronization message is discarded.

Meanwhile, in step S8000, since the time interval from the last reception is more than the threshold, i.e. the reception time interval from the last received synchronization message exceeds the predetermined time, the currently received synchronization message is provided to synchronization processor 104 that is an upper module.

In addition, upon receiving the synchronization message from protocol processor 106, synchronization processor 104 interprets the synchronization message. Then, according to the content of the synchronization message, for example, the data synchronization processing shown in FIG.3 starts.

These operations take place as CPU 110 repeats reading the program that specifies the processing in a layer stored in ROM 112 and reading data in RAM 114 to write the data on which the processing in the layer finished in RAM 114 again.

In other words, when data transmitted from server 300 is received in transmission/reception chip 116 and stored in RAM 114, CPU 110 reads the data out of RAM 114 while removing the header to connect, and determines whether or not the data is a synchronization message (in addition, the processing may be performed in a plurality of steps through the intermediation of RAM 114). When the data is not a synchronization message (in the case of NO in step S2000), the data is stored in RAM 114. On the other hand, when the data is a synchronization message (in the case of YES in step S2000), the processing of step S4000 and step S5000 is performed and the determination in step S6000 is made. Then, in the case of YES in step S6000, the data is discarded without being returned to RAM 114. On the other hand, in the case of NO in step 6000, the data is stored in RAM 114.

When the data is not a synchronization message, but is a web browser or e-mail message for example, CPU 110 reads the data out of RAM 114 and processes the data according to the relevant program read out of ROM 112. Moreover, also with respect to the synchronization message stored in RAM 114, similarly, CPU 110 reads the data out of RAM 114, interprets the synchronization message according to the program read out of ROM 112, and executes the data synchronization processing.

Assuming that this terminal apparatus 100 receives a large amount of synchronization messages, and that the received synchronization messages, despite CPU 100 that processes the interpretation of the synchronization messages sequentially, are left in RAM 114 and cause a state of overflow in RAM 114, transmission/reception chip 116 is unable to receive data and there is a threat that system down may occur.

However, since this terminal apparatus 100 discards synchronizationmessages receivedwithin a short interval less than a predetermined time (threshold) without executing message processing that is time consuming for CPU 110, even when a large amount of synchronization messages are received, system down can be avoided.

In addition, even when the discarded synchronization message includes a synchronization message (server alert message) that is originally necessary and instructs to start synchronization, since server 300 transmits again this synchronization message unless terminal apparatus 100 transmits a synchronization start request, there are no inconveniences. In this respect, the synchronization message is distinct from web browser and e-mail messages that are not retransmitted once discarded.

Thus, according to this embodiment, when a number of synchronization messages arrive during a predetermined period, all the messages are discarded except for the first one, so that even when a large amount of synchronization messages arrive at one time, it is possible to avoid damage. More specifically, for example, when a malicious third party sends a large amount of synchronization messages, it is possible to avoid damage such as system down and incapacitation of system.

### (Second embodiment)

The second embodiment is configured not to erroneously discard messages that arrive from a server during data synchronization processing.

The basic configuration of a terminal apparatus according to this embodiment is the same as that of the terminal apparatus according to the first embodiment shown in FIG. 5 and FIG.6 and will not be described below. However, this embodiment is distinct from the first embodiment in that synchronization processor 104, during the progress of synchronization processing (see (4) of FIG.3), sets a flag indicative of the progress of synchronization processing.

As described earlier, a server alert message whereby server 300 instructs terminal apparatus 100 to start synchronization is repeatedly sent out from server 300, unless terminal apparatus 100 sends out a synchronization start request. However, as for those messages sent from server 300 to terminal apparatus 100 during the progress of synchronization processing, there is no guarantee for their retransmission. Therefore, in this embodiment, synchronization processor 104 sets a flag indicating that the synchronization processing is in progress during the progress of synchronization processing, so that protocol processor 106 does not discard synchronization messages during the time the flag is set.

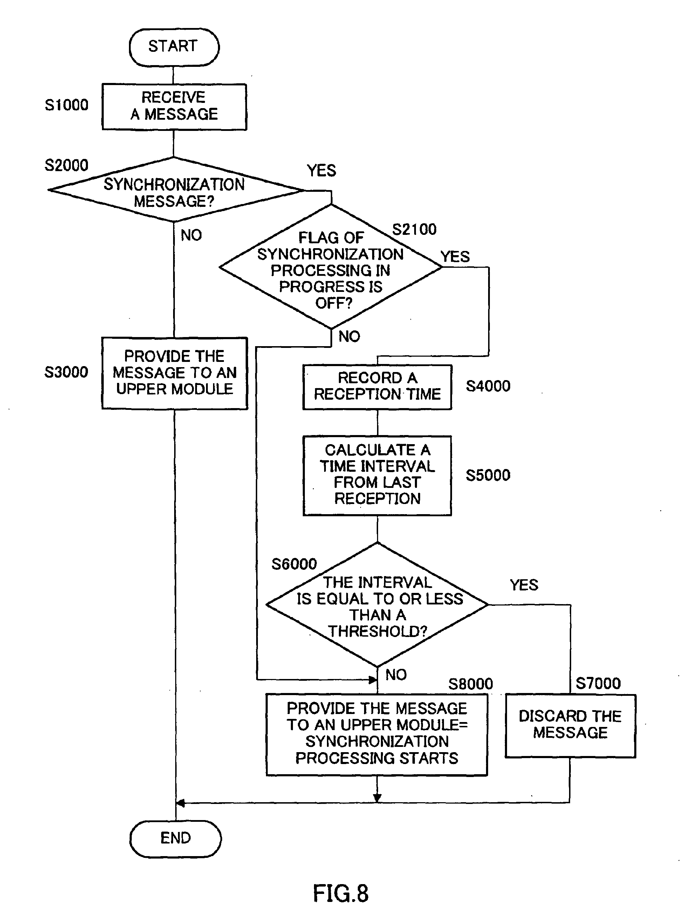

Next, the operation of protocol processor 106 according to this embodiment will be described with reference to the flowchart shown in FIG.8. FIG.8 illustrates the operation of protocol processor 106 to implement a synchronization message processing method according to this embodiment. The flowchart as illustrated in FIG.8 is stored in ROM 112 as a control program and implemented by CPU 110.

In this embodiment, as shown in FIG.8, step S2100 is inserted into the flowchart shown in FIG.7.

Step S1000 and step S2000 are the same as the corresponding steps in the flowchart of FIG.7, and their detailed explanations will be omitted. In addition, in this embodiment, when a received message is a synchronization message (S2000:YES), the processing flow proceeds to step S2100.

In step S2100, synchronization processor 104 determines whether or not a flag is set indicating that synchronization processing is in progress. As a result of this determination, when a flag indicating that the synchronization processing is in progress is not set (OFF) (S2100:YES), the processing flow proceeds to step S4000. When a flag indicating that the synchronization processing is in progress is set (S2100:NO), the processing flow promptly proceeds to step S8000.

Steps S4000 to S8000 are the same as the corresponding steps in the flowchart as illustrated in FIG.7, and their explanations are omitted. However, in this embodiment, the processing of step S8000 is performed when a flag is set indicating that synchronization processing is in progress (S2100: NO), in addition to when a time interval is less than or equal to a threshold (S6000: NO).

Thus, according to this embodiment, synchronization messages to be discarded are specified (limited) to server alert messages retransmitted from a server, so that the synchronization processing can be performed assuredly.

### (Third embodiment)

A case is described in the third embodiment where a white list is used to determine whether or not to discard a synchronization message.

The basic configuration of a terminal apparatus according to this embodiment is the same as that of the terminal apparatus according to the first embodiment shown in FIG. 5 and FIG. 6 and will not be described below. However, this embodiment is distinct from the first embodiment in that RAM 114 stores a white list therein and protocol processor 106 refers to the white list when determining whether or not to discard a synchronization message.

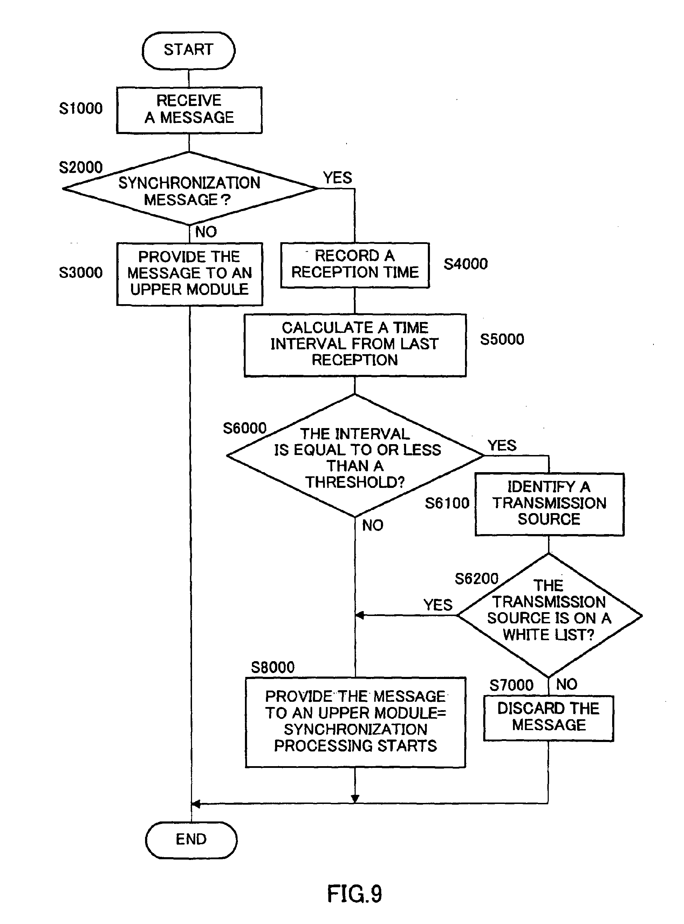

Next, the operation of protocol processor 106 according to this embodiment will be described with reference to the flowchart shown in FIG.9. FIG.9 illustrates the operation of protocol processor 106 to implement the synchronization message processing method according to this embodiment. In addition, the flowchart as illustrated in FIG.9 is stored in ROM 112 as a control program and implemented by CPU 110.

In this embodiment, as shown in FIG.9, step S6100 and step S6200 are inserted into the flowchart shown in FIG.7.

Steps S1000 to S6000 are the same as the corresponding steps in the flowchart shown in FIG.7, and their explanations are omitted. However, when a time interval is less than or equal to a threshold (S6000: YES), the processing flow proceeds to step S6100.

In step S6100, a transmission source of a received synchronization message is identified.

In step S6200, it is determined whether or not the transmission source identified in step S6100 is on the white list. As a result of the determination, the transmission source is not on the white list (S6200: NO), the processing flow proceeds to step S7000. When the transmission source is on the white list (S6200: YES), the processing flow proceeds to step S8000.

In step S7000, since a reception interval between synchronization messages is less than or equal to the threshold and the transmission source is not on the white list, the currently received message is discarded.

Meanwhile, in step S8000, since a reception interval between synchronization messages exceeds the threshold or the transmission source is on the white list, the currently received synchronization message is provided to synchronization processor 104 that is an upper module.

Thus, according to this embodiment, it is possible to avoid discarding synchronization messages sent from transmission sources that are on the white list. Further, the method for using the white list in this embodiment does not limit senders of messages to the transmission sources on the white list unlike the conventional method, and therefore, even when a server that sets software of a terminal apparatus is changed due to conveniences of the manufacturer, it is possible to receive messages from a changed server.

In addition, as an optional function, it is possible to automatically add a transmission source on which the synchronization processing is performed normally to the white list. In this case, for example, with respect to web browser and e-mail messages, the user needs to examine their contents and determine whether or not to put the transmission source on the white list. Meanwhile, with respect to synchronization messages, it is determined automatically whether the synchronization processing has been completed correctly, and when the synchronization processing has been correctly completed, the transmission source is put on the white list, thereby enabling automatic generation of the white list.

### (Fourth embodiment)

A case is described in the fourth embodiment where a white list is used to set (vary) a threshold for use in determining whether or not to discard a synchronization message.

The basic configuration of a terminal apparatus according to this embodiment is the same as that of the terminal apparatus according to the first embodiment shown in FIG.5 and FIG.6 and will not be described below. However, this embodiment is distinct from the first embodiment in that RAM 114 stores a white list therein and protocol processor 106 uses the white list to determine a threshold used in determining whether or not to discard a synchronization message.

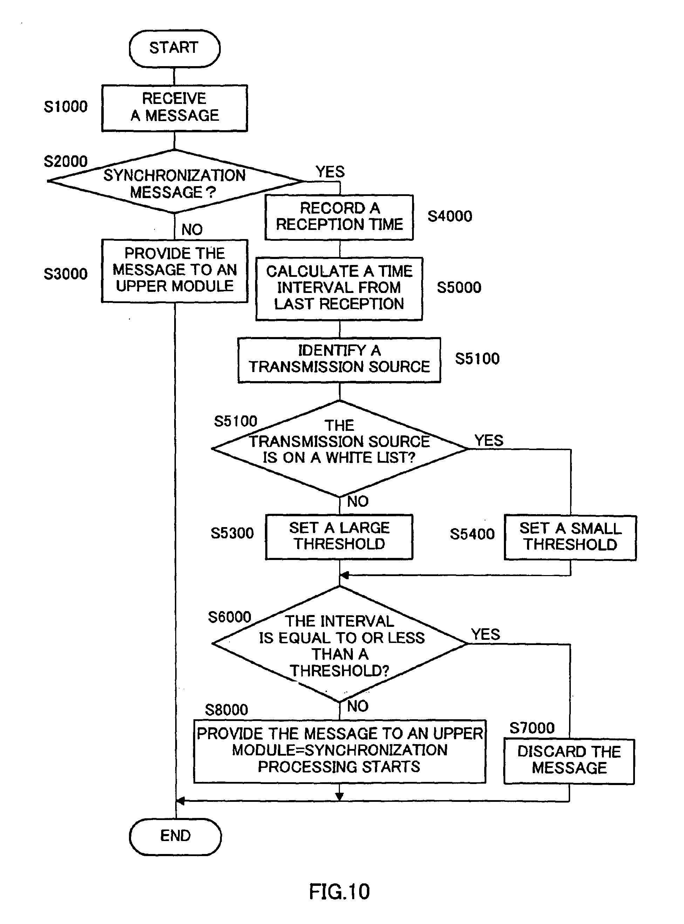

Next, the operation of protocol processor 106 according to this embodiment will be described with reference to the flowchart shown in FIG.10. FIG.10 illustrates the operation of protocol processor 106 to implement the synchronization message processing method according to this embodiment. In addition, the flowchart as illustrated in FIG.10 is stored in ROM 112 as a control program and implemented by CPU 110.

In this embodiment, as shown in FIG.10, steps S5100, S5200, S5300 and S5400 are inserted into the flowchart shown in FIG.7.

Steps S1000 to step S5000 are the same as the corresponding steps in the flowchart shown in FIG.7, and their explanations are omitted.

In step S5100, a transmission source of a received synchronization message is identified.

In step S5200, it is determined whether or not the transmission source identified in step S5100 is on the white list. As a result of the determination, the transmission source is not on the white list (S5200: NO), the processing flow proceeds to step S5300. When the transmission source is on the white list (S5200: YES), the processing flow proceeds to step S5400.

In step S5300, since the transmission source is not on the white list, the threshold is set to be a large value, and the processing flow proceeds to step S6000. Specifically, for example, in the case where a server alert message is received and a reference time is set at the processing time taken for synchronization processor 104 to complete the processing on the message, a large threshold is set when it is desired to provide CPU 110 with an additional time. In this case, for example, in order for the processing on server alert messages to occupy only up to about 50% of CPU 110 at the worst, the threshold is set at twice the reference time.

Meanwhile, in step S5400, since the transmission source is on the white list, the threshold is set at a small value, and the processing flow proceeds to step S6000. Specifically, an example is the case inverse to the case where the threshold is set at a large value as described in step S5300. Further, in the case of transmission destination of the white list as in this embodiment, the general threshold is set at 10 times the reference value to provide an additional time, while being at one-tenth (1/10) only when the transmission source is on the white list.

Steps S6000 to S8000 are the same as the corresponding steps in the flowchart as illustrated in FIG.7, and their explanations are omitted. In addition, in this embodiment, the processing of step S6000 is performed using a threshold set in step S5300 or S5400.

Thus, according to this embodiment, corresponding to whether a transmission source is on a white list or not, it is possible to adjust a message discarding condition. For example, when a transmission source is not on the white list, it is possible to restrict the message discarding condition severer.

### (Fifth embodiment)

A case is described in the fifth embodiment where a black list is used to determine whether or not to discard a synchronization message.

The basic configuration of a terminal apparatus according to this embodiment is the same as that of the terminal apparatus according to the first embodiment shown in FIG.5 and FIG.6 and will not be described below. However, this embodiment is distinct from the first embodiment in that RAM 114 stores a black list therein and protocol processor 106 refers to the black list when determining whether or not to discard a synchronization message.

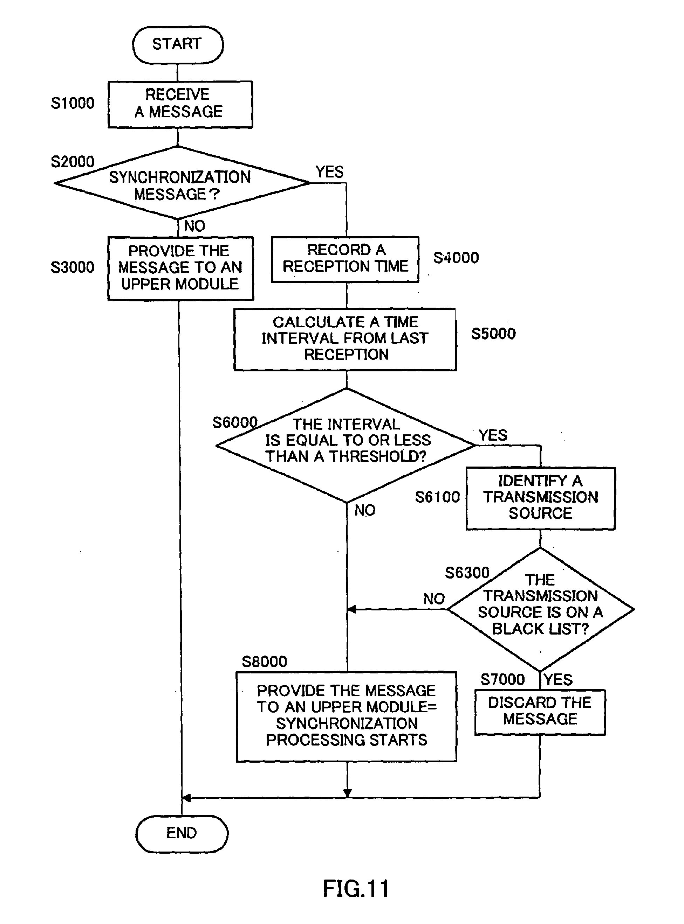

Next, the operation of protocol processor 106 according to this embodiment will be described with reference to the flowchart shown in FIG.11. FIG.11 illustrates the operation of protocol processor 106 to implement the synchronization message processing method according to this embodiment. In addition, the flowchart as illustrated in FIG.11 is stored in ROM 112 as a control program and implemented by CPU 110.

In this embodiment, as shown in FIG.11, step S6100 and step S6300 are inserted into the flowchart shown in FIG.7. In addition, as compared to the third embodiment as illustrated in FIG.9, step S6300 is inserted and step S6200 is deleted into/from the flowchart shown in FIG.9.

Steps S1000 to step S6000 are the same as the corresponding steps in the flowchart shown in FIG.7, and their explanations are omitted. However, in this embodiment, when a time interval is less than or equal to a threshold (S6000: YES), the processing flow proceeds to step S6100.

In step S6100, a transmission source of a received synchronization message is identified.

In step S6300, it is determined whether or not the transmission source identified in step S6100 is on the black list. As a result of the determination, the transmission source is on the black list (S6300: YES), the processing flow proceeds to step S7000. When the transmission source is not on the black list (S6300: NO), the processing flow proceed's to step S8000.

In step S7000, since a reception interval between synchronization messages is within the threshold and the transmission source is on the black list, the currently received message is discarded.

Meanwhile, in step S8000, since a reception interval between synchronization messages exceeds the threshold or the transmission source is not on the black list, the currently received synchronization message is provided to synchronization processor 104 that is an upper module.

Thus, according to this embodiment, it is possible to discard synchronization messages only when a reception interval between synchronization messages is not more the threshold and the transmission source is on the black list.

### (Sixth embodiment)

A case is described in the sixth embodiment where a black list is used to set (vary) a threshold for use in determining whether or not to discard a synchronization message.

The basic configuration of a terminal apparatus according to this embodiment is the same as that of the terminal apparatus according to the first embodiment shown in FIG.5 and FIG.6 and will not be described below. However, this embodiment is distinct from the first embodiment in that RAM 114 stores a black list therein and protocol processor 106 uses the black list to determine a threshold used in determining whether or not to discard a synchronization message.

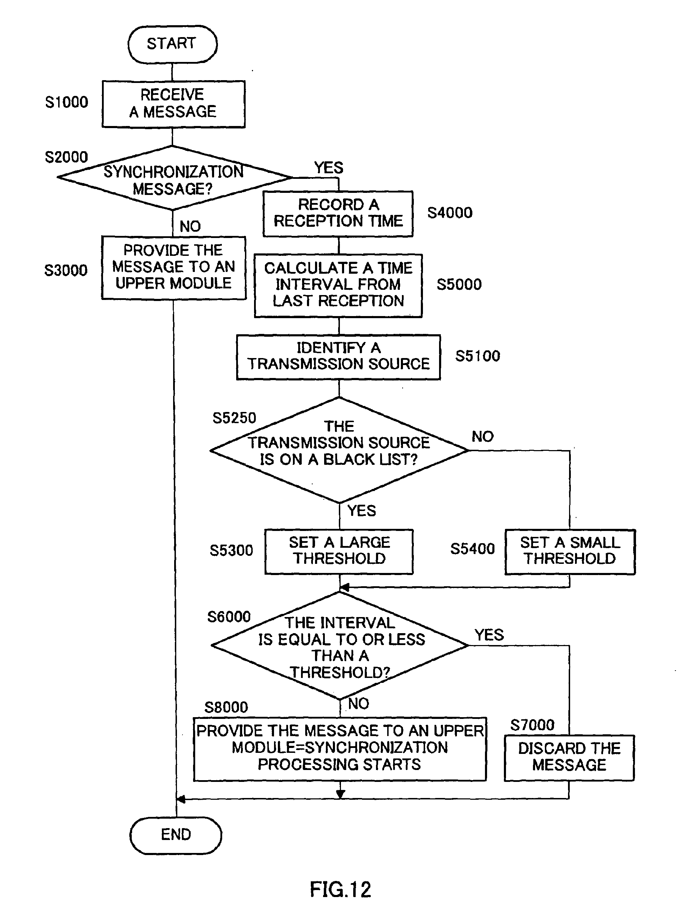

Next, the operation of protocol processor 106 according to this embodiment will be described with reference to the flowchart shown in FIG.12. FIG.12 illustrates the operation of protocol processor 106 to implement the synchronization message processing method of this embodiment. In addition, the flowchart as illustrated in FIG.12 is stored in ROM 112 as a control program and implemented by CPU 110.

In this embodiment, as shown in FIG.12, steps S5100, S5200, S5300 and S5400 are inserted into the flowchart shown in FIG.7. In addition, as compared to the fourth embodiment as illustrated in FIG.10, step S2500 is inserted and step S5250 is deleted into/from the flowchart shown in FIG.10.

Steps S1000 to step S5000 are the same as the corresponding steps in the flowchart shown in FIG.7, and their explanations are omitted.

In step S5100, a transmission source of a received synchronization message is identified.

In step S5200, it is determined whether or not the transmission source identified in step S5100 is on the black list. As a result of the determination, the transmission source is on the black list (S5200: YES), the processing flow proceeds to step S5300. When the transmission source is not on the black list (S5200: NO), the processing flow proceeds to step S5400.

In step S5300, since the transmission source is on the black list, the threshold is set to be a large value, and the processing flow proceeds to step S6000. Specifically, for example, in the case where a server alert message is received and a reference time is set at the processing time taken for synchronization processor 104 to complete the processing on the message, a large threshold is set when it is desired to provide CPU 110 with an additional time. In this case, for example, in order for the processing on server alert messages to occupy only up to about 50% of CPU 110 at the worst, the threshold is set at twice the reference time. Further, as another example, when a transmission source is on the black list and a message of the source is discarded preferentially, a large threshold is set. In this case, for example, in order to suppress the occupancy of the processing on a message from a transmission source on the black list to about 10% of CPU 110 at the worst, the threshold for the transmission source on the black list is set at ten times the reference time.

Meanwhile, in step S5400, since the transmission source is not on the black list, the threshold is set at a small value, and the processing flow proceeds to step S6000. Specifically, an example is the case inverse to the case where the threshold is set at a large value as described in step S5300.

Steps S6000 to S8000 are the same as the corresponding steps in the flowchart as illustrated in FIG.7, and their explanations are omitted. In addition, in this embodiment, the processing of step S6000 is performed using a threshold set in step S5300 or S5400.

Thus, according to this embodiment, corresponding to whether a transmission source is on a black list or not, it is possible to adjust a message discarding condition. For example, when a transmission source is on the black list, it is possible to restrict the message discarding condition severer.

### (Seventh embodiment)

A case is described in the seventh embodiment where a black list is automatically generated.

The basic configuration of a terminal apparatus according to this embodiment is the same as that of the terminal apparatus according to the first embodiment shown in FIG.5 and FIG.6 and will not be described below. However, this embodiment is distinct from the first embodiment in that RAM 114 stores a black list therein and protocol processor 106 refers to the black list when determining whether or not to discard a synchronization message, and performs processing of adding a transmission source to the black list when the same transmission source transmits synchronization messages in a short time successively.

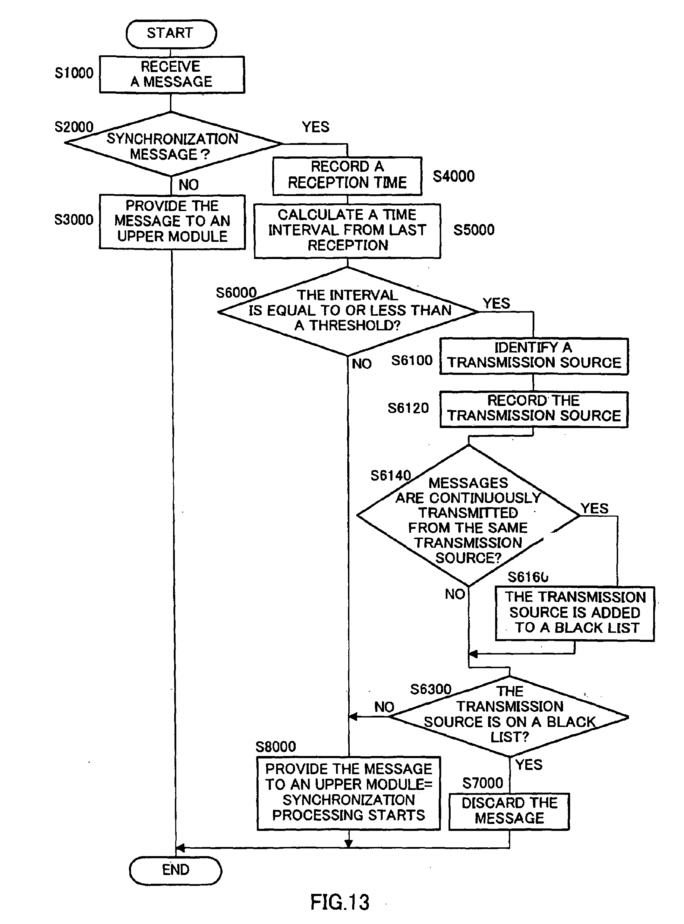

Next, the operation of protocol processor 106 according to this embodiment will be described with reference to the flowchart shown in FIG.13. FIG.13 illustrates the operation of protocol processor 106 to implement the synchronization message processing method according to this embodiment. In addition, the flowchart as illustrated in FIG.13 is stored in ROM 112 as a control program and implemented by CPU 110.

In this embodiment, as shown in FIG.13, steps S6100, S6120, S6140, S6160 and S6300 are inserted into the flowchart shown in FIG.7. In addition, as compared to the fifth embodiment as illustrated in FIG.11, steps S6120, S6140 and S6160 are inserted into the flowchart shown in FIG.11.

Steps S1000 to step S5000 are the same as the corresponding steps in the flowchart shown in FIG.7, and their explanations are omitted. In addition, in this embodiment, when a time interval is less than or equal to a threshold (S6000: YES), the processing flow proceeds to step S6100.

In step S6100, a transmission source of a received synchronization message is identified.

In step S6120, the transmission source identified in step S6100 is stored in RAM 114, for example.

In step S6140, referring to a record of the transmission source, it is determined whether or not the same transmission source transmits synchronization messages continuously. As a result of the determination, when the same transmission source transmits synchronization messages continuously (S6140: YES), the processing flow proceeds to step S6160. When the same transmission source does not transmit synchronization messages continuously (S6140: No), the processing flow proceeds to step S6300.

In S6160, since the same transmission source transmits synchronization messages continuously, the transmission source is added to the black list, and the processing flow proceeds to step S6300.

In step S6300, it is determined whether or not the transmission source identified in step S6100 is on the black list (containing the source added in step S6160). As a result of the determination, the transmission source is on the black list (S6300: YES), the processing flow proceeds to step S7000. When the transmission source is not on the black list (S6300: NO), the processing flow proceeds to step S8000.

In step S7000, since a reception interval between synchronization messages is within the threshold and the transmission source is on the black list, the currently received message is discarded.

Meanwhile, in step S8000, since a reception interval between synchronization messages exceeds the threshold or the transmission source is not on the black list, the currently received synchronization message is provided to synchronization processor 104 that is an upper module.

Thus, according to this embodiment, it is possible to discard synchronization messages only when a reception interval between synchronization messages is not more than the threshold and the transmission source is on the black list.

In addition, the present invention is not limited to the above-mentioned embodiments, and is capable of being carried into practice with various modifications thereof without departing from the scope of claims. For example, features of the embodiments are capable of being combined arbitrarily as appropriate.

As is apparent from the above descriptions, according to the present invention, when a malicious third party transmits a large number of synchronization messages, it is possible to avoid damage such as system down and paralysis of functions.

This application is based on the Japanese Patent Application No.2001-269247 filed on September 5, 2001, entire content of which is expressly incorporated by reference herein.

### Industrial Applicability

The present invention is applicable to a terminal apparatus that is connected to a server via a network and that acquires data synchronization with the data managed by the server, for example, a terminal apparatus used in a SyncML system.

## Claims

1. A synchronization message processing method, comprising the steps of:
receiving data;
determining whether or not the received data is a synchronization message;
recording a reception time of the received data, when the receive data is the synchronization message;
calculating a reception interval between a previously received synchronization message and a currently received synchronization message;
comparing the calculated reception interval with a threshold; and
discarding the currently received synchronization message when the calculated reception interval is not more than the threshold.

2. The synchronization message according to claim 1, the step of discarding precedes an interpretation of the received data.

3. The synchronization message processing method according to claim 1, wherein when the calculated reception interval is not more than the threshold, received synchronization messages are all discarded in the step of discarding.

4. The synchronization message processing method according to claim 1, further comprising the step of:
determining whether or not data synchronization processing is in progress,
wherein when the data synchronization processing is in progress, the synchronization message is not discarded in the step of discarding.

5. The synchronization message processing method according to claim 1, further comprising the steps of:
identifying a transmission source of the received synchronization message; and
determining whether or not the transmission source of the received synchronization message is on a white list;
wherein the currently received message is discarded in the step of discarding, when the calculated reception interval is not more than the threshold and the transmission source of the received synchronization message is not on the white list.

6. The synchronization message processing method according to claim 1, further comprising the steps of:
identifying a transmission source of the received synchronization message;
determining whether or not the transmission source of the received synchronization message is on a white list;and
setting the threshold used in the step of comparing, corresponding to whether or not the transmission source of the synchronization message is on the white list,
wherein, in the step of comparing, the calculated reception interval is compared with the threshold set in the step of setting.

7. The synchronization message processing method, according to claim 5, further comprising the steps of:
determining whether or not the data synchronization processing has been correctly completed based on the received synchronization message; and
adding a transmission source of the received synchronization message to the white list, when the data synchronization processing has been correctly completed based on the received synchronization message.

8. The synchronization message processing method, according to claim 6, further comprising the steps of:
determining whether or not the data synchronization processing has been correctly completed based on the received synchronization message; and
adding a transmission source of the received synchronization message to the white list, when the data synchronization processing has been correctly completed based on the received synchronization message.

9. The synchronization message processing method according to claim 1, further comprising the steps of:
identifying a transmission source of the received synchronization message; and
determining whether or not the transmission source of the received synchronization message is on a black list;
wherein the currently received message is discarded in the step of discarding, when the calculated reception interval is not more than the threshold and the transmission source of the received synchronization message is on the white list.

10. The synchronization message processing method according to claim 1, further comprising the steps of:
identifying a transmission source of the received synchronization message;
determining whether or not the transmission source of the received synchronization message is on a black list; and
setting the threshold used in the step of comparing, corresponding to whether or not the transmission source of the synchronization message is on the black list,
wherein, in the step of comparing, the calculated reception interval is compared with the threshold set in the step of setting.

11. The synchronization message processing method according to claim 9, further comprising the steps of:
identifying a transmission source of a currently received synchronization message when the calculated reception interval is not more than the threshold;
recording the transmission source of the currently received synchronization message when the calculated reception interval is not more than the threshold;
determining whether the transmission source of the currently received synchronization message is the same as a transmission source of the previously received synchronization message whose reception interval calculated is not more than the threshold, based on a result of record of the transmission source; and
adding the transmission source of the synchronization message to the black list when the transmission source of the currently received synchronization message is the same as the transmission source of the previously received synchronization message whose reception interval calculated is not more than the threshold.

12. The synchronization message processing method according to claim 10, further comprising the steps of:
identifying a transmission source of a currently received synchronization message when the calculated reception interval is not more than the threshold;
recording the transmission source of the currently received synchronization message when the calculated reception interval is not more than the threshold;
determining whether the transmission source of the currently received synchronization message is the same as a transmission source of the previously received synchronization message whose reception interval calculated is not more than the threshold, based on a result of record of the transmission source; and
adding the transmission source of the synchronization message to the black list when the transmission source of the currently received synchronization message is the same as the transmission source of the previously received synchronization message whose reception interval calculated is not more than the threshold.

13. A synchronization message processing apparatus comprising:
a receiving section that receives data;
a determiner that determines whether or not the received data is a synchronization message;
a recorder that records a reception time of the received data, when the receive data is determined to be the synchronization message;
a calculator that calculates a reception interval between a previously received synchronization message and a currently received synchronization message;
a comparer that compares the calculated reception interval with a threshold; and
a discarding section that discards the currently received synchronization message when the calculated reception interval is not more than the threshold.

14. A synchronization message processing program for having a computer execute the steps of:
receiving data;
determining whether or not the received data is a synchronization message;
recording a reception time of the received data, when the receive data is the synchronization message;
calculating a reception interval between a previously received synchronization message and a currently received synchronization message;
comparing the calculated reception interval with a threshold; and
discarding the currently received synchronization message when the calculated reception interval is not more than the threshold.
